# EUROPEAN PATENT APPLICATION

(11) **EP 1 403 758 A2**
(43) Date of publication of application: **31.03.2004**
(21) Application number: 03255562.5
(22) Date of filing: 05.09.2003
(51) Int. Cl.: G06F 3/12

(54) **Image printing preview device and image forming apparatus**

(30) Priority: 18.09.2002 JP 2002271484; 08.08.2003 JP 2003290450
(71) Applicant: SEIKO EPSON CORPORATION, Shinjuku-ku, Tokyo 163-0811 (JP)
(72) Inventor: Nitta, Takashi, Suwa-shi, Nagano-ken 392-8502 (JP); Koyama, Fumio, Suwa-shi, Nagano-ken 392-8502 (JP)
(74) Representative: Sturt, Clifford Mark

(57) **Abstract**

To make it possible to draw an image as intended.

A printing device 1 displays a previewed image on a surface for printing (printing paper or a surface for pasting a print) to allow the user to preview how content data will be printed. As the user adjusts the previewed image to obtain intended results, an image identical to the image being previewed is printed on the printing paper. This makes it easy to print desired content. Specifically, since the user can verify an image displayed on the surface on which the image will be actually printed or pasted, it is poss ible to prevent the actual print produced or pasted on the printing paper from differing from the user's expectations.

## Description

### BACKGROUND OF THE INVENTION

### Field of the Invention

The present invention relates to a preview device, electronic device, and image forming apparatus for allowing images such as characters or graphic figures to be previewed before output.

### Description of the Related Art

Conventionally, a printing device is used to print data processed by an information processing unit such as a PC (personal computer).

The printing device used here is generally designed to print an entire page according to a page layout prepared by the information processing unit.

However, with such a printing device, since printing paper is actually printed after performing page layout on a screen of the information processing unit, the actual printout sometimes does not match the layout on the screen. Besides, it is troublesome to perform page layout on screen.

To deal with this situation, printing devices provided with the capability to preview print position on paper have been proposed to perform page layout easily. For example, a printer described in Japanese Patent Laid-Open No. 6-15920 is provided with light-emitting capability to indicate print position on printing paper, and thus allows the user to do printing at desired positions on the printing paper.

Also, a document processor described in Japanese Patent Laid-Open No. 10-124510 allows the user to edit a document by seeing printing paper through a transmissive liquid crystal display placed over the printing paper in order to adjust page layout to actual paper in the process of editing a document.

However, the printer described in Japanese Patent Laid-OpenNo. 6-15920 onlyprojects a rectangular mark of light onto printing paper to indicate print position, and does not have the capability to preview detailed conditions such as size, shape, and color of content to be printed.

Also, the document processor described in Japanese Patent Laid-Open No. 10-124510 allows the user to edit a document by seeing it through a liquid crystal display, but does not allow the user to preview edited print data to make fine adjustments to print data including size adjustment of entire content to be printed, parallel or rotational translation, color conversion, transformation, etc.

Such a problem is commonly encountered when drawing characters or graphic figures of predetermined shape in desired positions (e.g., when doing embroidery on a sewing machine) .

The obj ect of the present invention is to make it possible to draw an image as intended.

### SUMMARY OF THE INVENTION

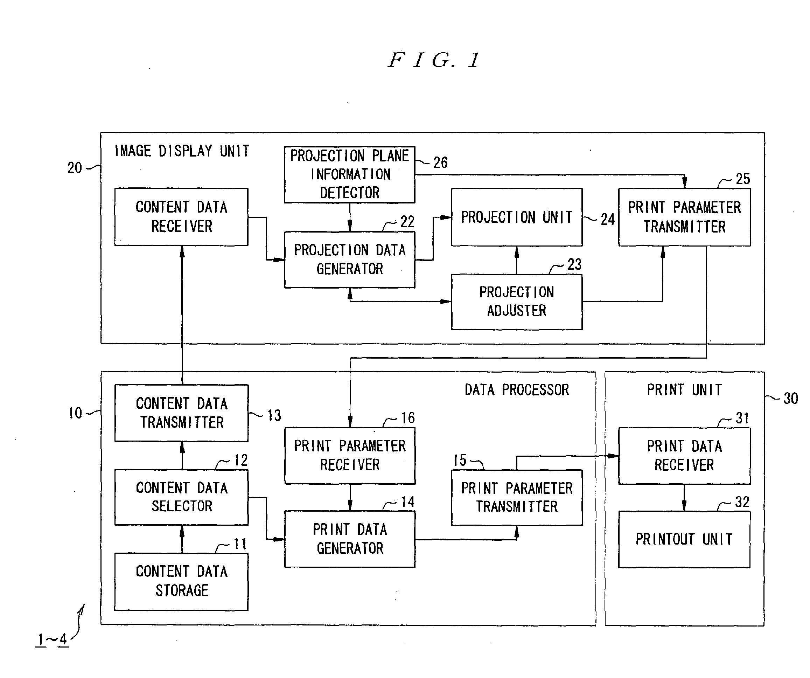

To achieve the above object, the present invention provides a preview device, comprising: display means (e.g., an image display unit 20 in FIG. 1) for simulating a state where a predetermined image is actually drawn on an image-forming surface (e.g., a printing surface or a surface on which a printed image is pasted) on which a tangible image is formed (e.g., printing an image directly or pasting a sheet with a printed image); and display information acquisition means for acquiring display information (e.g., "projection plane information" or "projection adjustment values" in DETAILED DESCRIPTION OF THE PREFERRED EMBODIMENTS) about actual display state of the image displayed by the display means on the image-forming surface.

Incidentally, the "state where an image is drawn" here includes a state where the image is printed and a state where a sheet with the image printed is pasted. When an image is drawn directly on an image-forming surface by printing or the like, "projection plane" in DETAILED DESCRIPTION OF THE PREFERRED EMBODIMENTS matches the image-forming surface.

Also, the "image" here generally includes line drawings such as characters and expressions of other graphic figures.

Furthermore, the "tangible image" here means an image which is formed as something tangible when the image is printed or a sheet with the image printed is pasted unlike intangible images such as projected images. Also, the "predetermined image" means a concrete image (image specified to be previewed) which can be made into a tangible image while the "image displayed by the display means" refers to an image resulting from a simulation of a state where a predetermined image is actually drawn.

Incidentally, the phrase "simulating a state where a predetermined image is actually drawn on an image-forming surface on which a tangible image is formed" widely includes displaying a "state where an image is actually drawn" to the extent that "the viewer can imagine the state accurately." Specifically, it includes the concepts represented by expressions such as "displaying a state where an image is actually drawn" or "displaying a state which exists when an image is actually drawn" or expressions such as "simulating a state," "imitating a state," or "displaying virtually." Thus, these concepts include, for example, a state where a predetermined image is actually drawn on an image-forming surface on which a tangible image is formed, with a mark being displayed indicating that the image is simulated.

With this configuration, since the display means allows the user to verify the state where a predetermined image is drawn on the image-forming surface, it is possible to avoid situations in which unintended results are produced and improve the efficiencywithwhichdrawingdata is created. Also, since the preview device is equipped with the display information acquisition means, it is possible to modify drawing data as required referring to the displayed image.

Also, the display information contains at least the size of the displayed image on the image-forming surface, position of the displayed image on the image-forming surface, or color of the displayed image on the image-forming surface.

This configuration makes it possible to preview (check in advance) colors which are hard to check simply on a display or the like of a PC or the like as well as positions and sizes which are particularly difficult to check by a conventional method.

Also, the preview device further comprises correction means for changing the display state of the image displayed by the display means on the image-forming surface.

This configuration makes it possible to check different variations of drawing by correcting the display state, and thereby ensures optimal drawing results.

Also, the display means simulates a state where an image is actually drawn on the image-forming surface by projecting light on the image-forming surface.

This configuration eases restrictions on display surfaces anddisplay size greatly and increases the flexibility of display drastically. Besides, by projecting images onto various display surfaces, it is possible to check results of drawing taking into consideration textures on the display surfaces.

Also, the display information acquisition means acquires the display information based on at least the position of the display means to the image-forming surface, distance of the displaymeans from the image-forming surface, proj ection angle of light projected onto the image-forming surface, or color of the image-forming surface.

This configuration makes it possible to acquire various parameters needed for projection-based previewing.

Also, the distance of the display means from the image-forming surface is acquired based on the magnification and focal distance of an optical system used by the display means to project light.

This configuration makes it possible to acquire the distance to the image-forming surface without using a special device such as an image sensor, and thus to reduce the manufacturing cost of the preview device.

Also, the displaymeans includes a displaywhich transmits light fromone side (the rear side which faces the image-forming surface, in this case) to the other side (the side which is visible on the surface, in this case) of a display surface where images are displayed and the display means simulates a state where a predetermined image is actually drawn on the image-forming surface with the display superimposed over the image-forming surface.

This configuration makes it possible to preview an image, checking it against what has already been drawn on the image-forming surface. Thus, if a frame (e.g., a frame for a name) has already been drawn specifying what should be drawn init, whatisspecifiedcanbedrawnaccuratelyinthespecified position.

Also, the preview device is capable of generating drawing data (e.g., "print data" in DETAILED DESCRIPTION OF THE PREFERRED EMBODIMENTS) for drawing the predetermined image on the image-forming surface exactly like the simulated predetermined image.

This configuration makes it possible to generate drawing data needed to draw an image confirmed by preview.

Also, the preview device further comprises drawing means ( e . g. , print unit 30 in FIG. 1) for drawing the predetermined image tangibly based on the drawing data.

In other words, the drawing means can tangibly draw the image associated with the drawing data.

Also, the drawing means draws the predetermined image directly on the image-forming surface based on the drawing data.

This configuration makes it possible to draw the image on the image-forming surface right away after preview.

Also, the drawing means draws the predetermined image on a drawing medium (e.g., a label or large-format printing paper) added to the image-forming surface, based on the drawing data.

This configuration allows an image drawn on a drawing medium to be pasted to the image-forming surface even if the image cannot be drawn directly on the image-forming surface.

Also, the drawing means is capable of drawing the predetermined image on a plurality of drawing media by dividing it into parts.

This configuration allows a desired image to be drawn even on a large-sized image-forming surface.

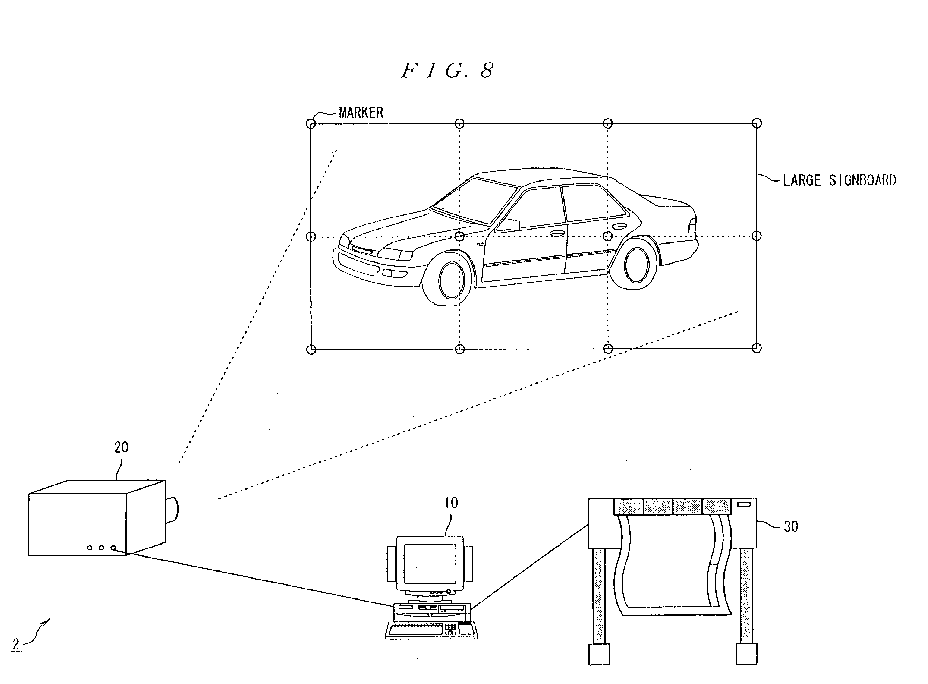

Also, the image-forming surface contains markers (e.g., markers in FIG. 8) which serve as a guide for dividing the image-forming surface into multiple areas, the display information acquisition means acquires the positions of the markers on a displayed image, and the drawing means draws the predetermined image on a plurality of drawing media by dividing it into parts based on the positions of the markers.

This configuration makes it easy to divide an image when drawing the image on a large-sized image-forming surface.

Also, the drawing means is a predetermined printer.

Also, the drawing means is an ink jet printer.

This configuration makes it possible to do printing, relatively unconstrained by surface geometries of the image-forming surface.

Also, the preview device further comprises colormatching means for matching colors between the image displayed by the display means and the image drawn by the drawing means.

This configuration makes it possible to match colors between a previewed image and drawn image more accurately.

Also, the preview device is capable of acquiring the display information about a plurality of images, judging the shape of each image based on the display information, and laying out the plurality of images on a drawing surface at a higher density.

For example, roughly triangular images can be placed upside down alternately.

This configuration makes it possible to draw images efficiently on a drawing surface.

The phrase "at a higher density" means that the array pattern of output images is denser than the array pattern of input images. The present invention lays out images at a higher density than when they are arranged simply.

Also, the preview device further comprises cutting means for automatically cutting off, or making it easy to cut off, images drawn by the drawing means.

This configuration makes it possible to reduce the workload of cutting off a drawing medium to be pasted to the image-forming surface. Also, it allows the drawing medium to be cut off at appropriate cutting positions.

Also, the preview device further comprises image reading means for reading images and is capable of utilizing data about the images read by the image reading means.

With this configuration, the preview device can capture images, improving convenience.

For example, the user can capture a name he/she wrote by himself/herself and use it in a manner similar to the use of a seal by printing its image repeatedly.

Also, at least one of the means described above is configured as a unit separate from the othermeans and is capable of communicating with the other means.

This configuration makes it possible to operate a specific means separately from the other means. For example, the drawing means, if provided as a separate pen-type printing device, will print on any desired surface. Also, this configuration makes it possible to decide installation locations of individual means more flexibly. For example, images can be previewed in Japan and drawn overseas.

Also, thedisplaymeans includes apluralityof projectors capable of projecting screen images onto the image-forming surface and displays the predetermined image using the screen images projected by the individual projectors.

This configuration makes it possible to display preview images appropriately on a larger-sized image-forming surface.

Also, the present inventionprovides an electronic device equipped with the preview device set forth in any of claims 1 to 21.

Also, the present invention provides an image forming apparatus equipped with the preview device set forth in any of claims 1 to 21.

Here, drawing an image generally includes drawing an image tangibly by printing or the like.

The present invention displays a screen image on the image-forming surface to allow the user to preview how the image will be drawn and acquires the display state of the image being previewed.

Thus, the user can adjust the screen image to obtain intended drawing results. In short, the user can draw an image as intended.

### BRIEF DESCRIPTION OF THE DRAWINGS

FIG. 1 is a block diagram showing functional configuration of a printing device 1 according to the present invention;
FIG. 2 is a flowchart showing processes for printing on the printing device 1;
FIG. 3 is a diagram showing an example of layout used to print multiple patterns;
FIG. 4 is a diagram showing a stationary printing device 1 in which a data processor 10, image display unit 20, and print unit 30 are housed in a single enclosure;
FIG. 5 is a diagram showing an example of how the image display unit 20 is used when it is configured as a separate unit;
FIG. 6 is a diagram showing an example in which illustrations of a tree are printed on a letter-size label sheet;
FIG. 7 is a diagram showing how a printing device 2 is used to print a life-size POP signboard;
FIG. 8 is a diagram showing how the printing device 2 is used to print a large signboard;
FIG. 9 is a diagram showing how a printing device 3 is used for textile printing; and
FIG. 10 is a diagram showing how a printing device 4 is used to print wallpapers.

### DETAILED DESCRIPTION OF THE PREFERRED EMBODIMENTS

Embodiments of the present invention will be described in detail below with reference to drawings.

### (First Embodiment)

Configuration will be described first.

FIG. 1 is a block diagram showing functional configuration of a printing device 1 according to this embodiment. The printing device 1 has image display capability for previewing print data.

In FIG. 1, the printing device 1 comprises a data processor 10, image display unit 20, and print unit 30.

First, the data processor 10 will be described.

The data processor 10 comprises a content data storage 11, content data selector 12, content data transmitter 13, print data generator 14, print data transmitter 15, and print parameter receiver 16.

The content data storage 11 stores various content data selectable as print data. The content data are in bitmap format such as JPEG (Joint Photographic Experts Group) format or in vector format such as SVG (Scalable Vector Graphics) format.

The content data selector 12 allows the user to select data to be printed from among the content data stored in the content data storage 11. In order for the user to select the data to be printed, the content data selector 12 displays the content data, item by item, in sequence on a display device such as LCD (Liquid Crystal Display) (not shown) or displays a screen of content data at a time to receive the choice of data to be printed.

Then, the content data selector 12 sends the selected content data to the content data transmitter 13 and print data generator 14.

The content data transmitter 13, which has communications capabilities for Bluetooth and other short-range wireless communications, sends the content data selected via the content data selector 12 to a content data receiver 21 of the image display unit 20.

The print data generator 14 generates print data based on the content data sent from the content data selector 12 and print parameters (described later) sent from the print parameter receiver 16 described later. When generating the print data, the print data generator 14 applies geometry transformations (scaling, rotation, transformation, etc.) such as affine transformations or color conversion to the content data received from the content data selector 12, based on the print parameters. Also, the print position is adjusted so that the print data will be printed in place.

Furthermore, since content data themselves typically do not have a high resolution, when generating print data, content data with a low resolution is often enhanced to prepare the print data with a high resolution. Printing resolution is determined by user specification or prescribed print quality. If print quality of 720 dpi horizontal by 720 dpi vertical is specified, the print data generator 14 generates print data with a horizontal resolution of 720 dpi and vertical resolution of 720 dpi so that the resulting image appears as good as the preview image. Normally, since the resolution on the projection plane of a projector and the like is not very high, although the printed image is equal in position, size, etc. to the preview image, the printed image has a higher resolution than the preview image, resulting in a print of higher quality image.

Incidentally, the color conversion here is the process of adjusting the colors of the content data so as to match those of the projected screen image verified by the user. That is, since printed colors do not appear as they should depending on the color of the printing surface (projection plane), the colors used for printing is changed according to the color of the printing surface so that intended colors will be obtained after printing. If appropriate corrections cannot be made by changing the colors used for printing, the printing surface is undercoated with a predetermined color (e.g., white) so that intended colors will be obtained after printing.

Various formats are available for the print data, including the same format as content data, predetermined application data, or printer commands.

The print data generator 14 sends the generated print data to the print data transmitter 15.

The print data transmitter 15 sends the print data received from the print data generator 14 to a print data receiver 31 of the print unit 30.

The print parameter receiver 16 receives print parameters sent from a print parameter transmitter 25 of the image display unit 20 and sends them to the print data generator 14.

Next, the image display unit 20 will be described.

The image display unit 20 comprises the content data receiver 21, a projection data generator 22, a projection adjuster 23, a projection unit 24, the print parameter transmitter 25, and a projection plane information detector 26.

The content data receiver 21, which has communications capabilities for Bluetooth and other short-range wireless communications, receives the content data sent from the content data transmitter 13 of the data processor 10 . Then, the content data receiver 21 sends the received content data to the projection data generator 22.

The projection data generator 22 determines the mode in which the content data received from the content data receiver 21 will be projected, with reference to projection plane information (described later) received from the projection plane information detector 26 as well as to the projection adjustment values (described later) received from the projection adjuster 23. The projection data generator 22 makes corrections, as required, inproj ecting the content data. The corrections include, firstly, corrections made to the shape of the screen image if the screen image is projected at oblique angles to the projection plane or if the projection plane is not level, and secondly, corrections made to the colors of the projected image itself in accordance with the color of the proj ection plane if the color of the proj ection plane makes the colors of the screen image look different from the original ones. Incidentally, the projection data generator 22 can make corrections here through data processing of the content data.

The projection data generator 22 sends the projection unit 24 a signal for projecting the screen image in the determined mode.

The projection adjuster 23 varies projection adjustment values, which are parameters including the focus, size, position, projection angle, and color of the screen image to be projected, according to user's actions. Regarding the color, for example, hue, lightness, contrast, chroma, etc. can be specified, and so on.

For the projection adjustment values, default values or preset values may be used, especially when there is no need for adjustment or when given content data is projected for the first time. Also, before projecting content data, projection position or size may be specified in advance using a predetermined method. The projection position or size may be specified, for example, as follows: a pair of diagonals which define a rectangle of a proj ection area may be projected onto the projection plane, allowing the user to determine the projection position or size, orapairof diagonals which define a rectangle of a projection area may be entered by the user in the printing device 1.

To specify the proj ection adjustment values, a mechanical method and software-based method are available: the former involves the use of an adjustment ring, button, or the like while the latter involves displaying an adjustment screen on a predetermined display unit.

The projection unit 24 projects a screen image with reference to the projection adjustment values received from the projection adjuster 23 and based on the signal received from the projection data generator 22. In doing so, the projection unit 24 makes corrections, as required, in projecting the content data. The corrections made here are optical or mechanical ones, which cannot be made through data processing of the content data.

The print parameter transmitter 25 acquires print parameters based on the projection plane information and proj ection adjustment values concerning the screen image being projected and sends them to the print parameter receiver 16 of the data processor 10. The print parameters acquired here may be the projection plane information and projection adjustment values themselves or predetermined parameters generated from the projection plane information andproj ection adjustment values.

Incidentally, the print parameter transmitter 25 sends the print parameters to the print parameter receiver 16 when the user verifies the projected screen image and presses a predetermined button.

The projection plane information detector 26 is equipped with various sensors and detects various information (projection plane information) about the projection plane.

The projection plane information contains the color of the projection plane, distance to the projection plane, inclination of the projection plane (relative angle to the projection plane), or the like.

To detect the projection plane information, the project ion plane information detector 2 6 measures the distance to the projection plane or inclination of the projection plane with ultrasonic, infrared, or laser sensors and measures the color of the projection plane with a CCD (Charge Coupled Diode). Incidentally, positions and angles can be detected by taking measurements with multiple sensors. Also, distances can be determined by measuring reflection times of ultrasonic waves or the like using sensors or calculated from the magnification and focal distance of a lens. Furthermore, it is also possible to acquire the size and position of an image on the projection plane using a CCD. That is, if the distance to the projection plane is known, it is possible to acquire the size and position of the image by capturing the image on the projection plane using the CCD.

Next, the print unit 30 will be described.

The print unit 30 comprises the print data receiver 31 and printout unit 32.

The print data receiver 31, which has communications capabilities for Bluetooth and other short-range wireless communications, receives the print data sent from the print data transmitter 15 of the data processor 10. Then, the print data receiver 31 sends the received print data to the printout unit 32.

The printout unit 32 is equipped with a printer head capable of ink jet printing and prints the print data received from the print data receiver 31 on the printing surface.

Incidentally, although it has been explained that the data processor 10, image display unit 20, and print unit 30 are separate unit witch communicate with each other, they may be configured as an integral unit. Also, the components of the printing device 1 may be distributed over different sites and connected via a network.

Now, operation will be described.

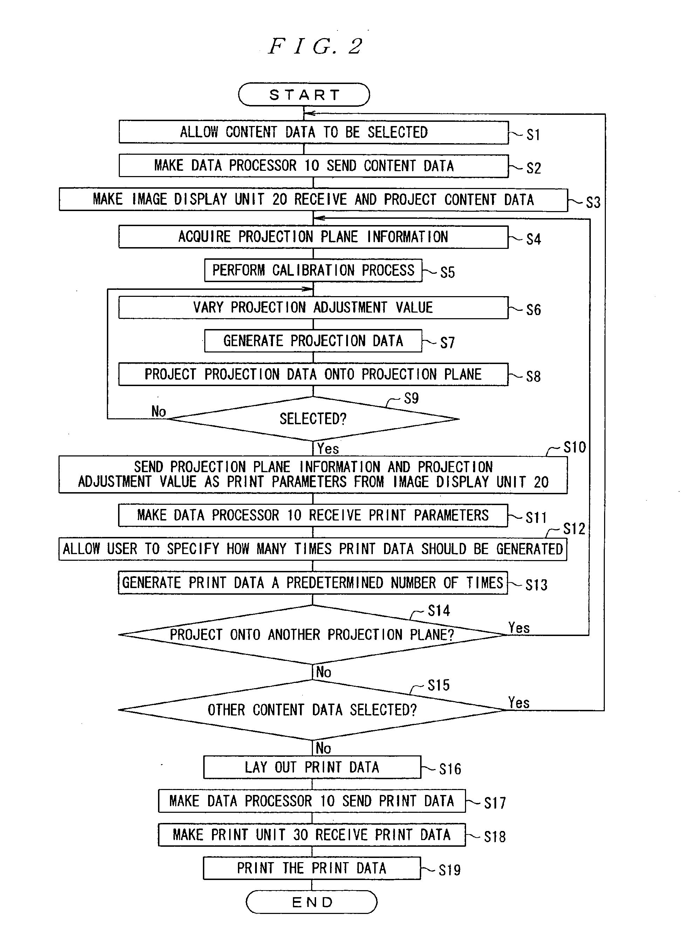

FIG. 2 is a flowchart showing processes for printing on the printing device 1.

In FIG. 2, the printing device 1 allows the user to select content data to be printed (Step S1).

Then, the printing device 1 sends the selected content data from the data processor 10 to the image display unit 20 (Step S2). The image display unit 20 receives the content data and projects it (Step S3).

Next, the printing device 1 makes the projection plane information detector 26 of the image display unit 20 acquire projection plane information (Step S4) and performs a calibrationprocess to match colors between the previewed image and printed image based on the color of the projection plane acquired as a projection adjustment value (Step S5). As a method for calibration, a method described in Japanese Patent Laid-Open No. 2003-50572 can be used, for example.

Then, the printing device 1 makes the proj ection adj uster 23 vary the projection adjustment value in response to user actions (Step S6).

Next, the printing device 1 generates projection data with reference to the projection plane information and projection adjustment value andbased on the content data (Step S7) .

Then, the printing device 1 projects the projection data onto the projection plane (Step S8) and judges whether the projected image is confirmed as an image to be printed (Step S9). This judgment may be made based on whether the user has verified the projected image and pressed a predetermined button.

If it is judged in Step S9 that the projected image is not confirmed as an image to be printed, the printing device 1 goes to Step S6. On the other hand, if it is judged that the projected image is confirmed as an image to be printed, the printing device 1 sends the projection plane information and projection adjustment value as print parameters from the image display unit 20 to the data processor 10 (Step S10).

Next, the printing device 1 makes the data processor 10 receive the print parameters (Step S11) and allows the user to specify how many times the print data should be generated (the number of times the image should be printed) (Step S12) .

Then, based on the print parameters, the printing device 1 generates the print data a predetermined number of times (Step S13) and judges whether the screen image will be projected to another projection plane (Step S14). This judgment may be made based on whether the user has pressed a control button to specify proj ection again. Incidentally, to generate print data multiple times, it can be generated only once and its copies can be used for the rest of the printing.

If it is judged in Step S14 that the screen image will be proj ected to another proj ection plane, the printing device 1 goes to Step S4. On the other hand, if it is judged that the screen image will not be projected to another projection plane, the printing device 1 judges whether other content data is selected (Step S15). This judgment may be made based on whether the user has taken some action (pressed a button or the like) to change the object to be printed.

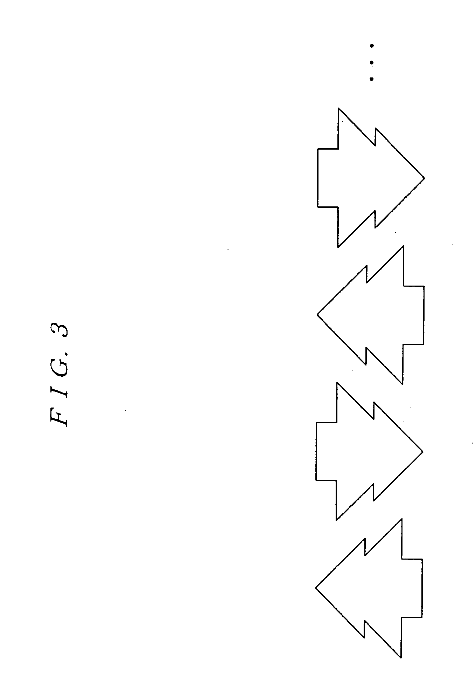

If it is judged in Step S15 that other content data is selected, the printing device 1 goes to Step S1. On the other hand, if it is judged that no other content data is selected and if there are multiple items of print data, the printing device 1 lays out the print data automatically (Step S16). The printing device 1 lays out the print data according to the shapes of the printing paper and image to be printed in such a way as to make effective use of the printing surface. In other words, the printing device 1 lays out the print data so as to print the image at a higher density. For example, when printing multiple images on letter-size printing paper, the printing device 1 performs layout in such a way that all the images fit in the printing paper. Specifically, if the images are roughly triangular as shown in FIG. 3, the printing device 1 lays out the images upside down alternately. Also, when printing a label sheet, individual images may be placed lengthways or sideways whichever is more convenient for them to be cut out.

Incidentally, when multiple items of print data are laid out, the printing device 1 treats the entire layout which forms an overall image as a single item of print data.

Next, the printing device 1 sends the print data from the data processor 10 to the print unit 30 (Step S17). The print unit 30 receives the print data (Step S18).

Then, the printing device 1 prints the print data (Step S19) based on the layout prepared in Step S15 and finishes processing.

Now, description will be given of how printing is done on a specific printing device configured as the printing device 1.

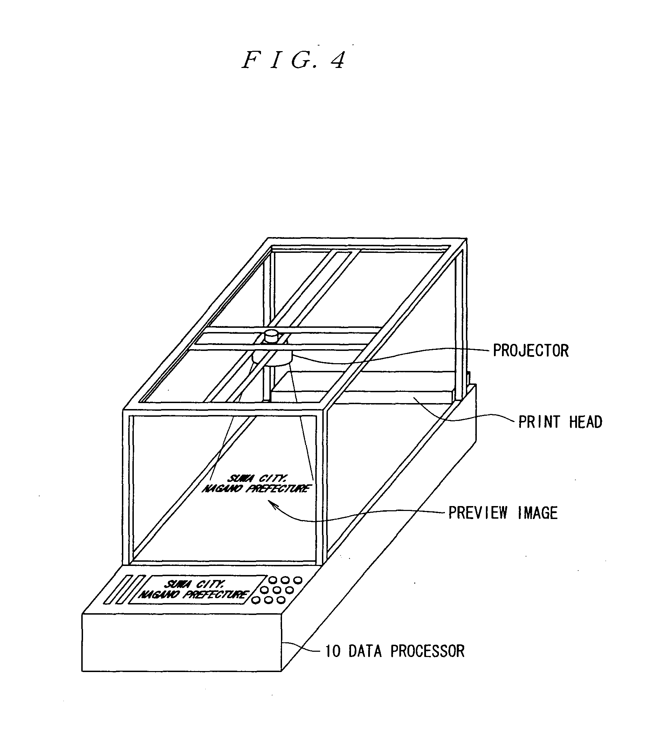

FIG. 4 shows a stationary printing device 1 in which the data processor 10, image display unit 20, and print unit 30 are housed in a single enclosure.

In the printing device 1 in FIG. 4, printing paper is placed on the upper surface (hereinafter referred to as the "paper mounting surface") of the data processor 10 which constitutes the main unit and images are printed as the print head moves over the paper mounting surface. A proj ector which corresponds to the image display unit 20 is installed at a predetermined height from the paper mounting surface. It can move in a plane located at the predetermined height from the paper mounting surface. Incidentally, the distance between the projector and the paper mounting surface in the printing device 1 may be made variable. However, simple arithmetic operations can be used in generating print data if this distance is constant.

With the above configuration, the user prints his/her address ("Suwa City, Nagano Prefecture" in this case) on the printing device 1 as follows.

First, the user places printing paper on the papermounting surface and newly enters his/her address or selects it from stored content data in the data processor 10.

Consequently, characters "Suwa City, Nagano Prefecture" are projected from the projector onto the printing paper for preview.

Then, the user makes adjustments so that the projected characters "Suwa City, Nagano Prefecture" match the intended position, size, etc. on the paper.

When the user verifies that the projected image matches the intended position, size, etc. and presses an Enter button, the printing device 1 prepares an image equal in position, size, etc. to the projected image and prints the characters "Suwa City, Nagano Prefecture" exactly like the projected image, by moving the print head.

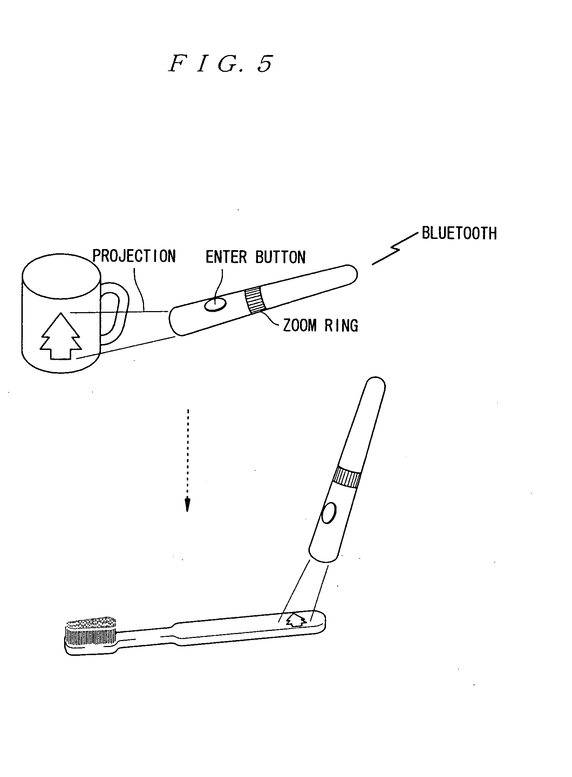

FIG. 5 shows an example of how the image display unit 20 is used when it is configured as a separate unit. The image display unit 20 in FIG. 5 is a portable type and is capable of projecting a preview image while being held in hand. It can be made more convenient if equipped with capabilities to correct for hand movements by mechanically detecting acceleration or by detecting images. By making the image display unit 20 portable in this way, it is possible to drastically increase the flexibility in selecting the projection plane for preview.

In FIG. 5, a PC (Personal Computer) or the like which serves the function of the data processor 10 sends content data related to an illustration of a tree to the image display unit 20 via Bluetooth or the like.

The image display unit 20 is a small LCD (Liquid Crystal Display) projector. It projects the received illustration of a tree onto a cup or a toothbrush.

The user adjusts the size of the illustration by rotating a zoom ring. Either an optical zoom or digital zoom may be used.

When the illustration is adjusted to the intended size, the user presses the Enter button. Incidentally, an user interface in the image display unit 20 may be not only a visual one which displays images, but also an auditory one.

Consequently, the projection plane information and projection adjustment value in the current state are sent to the data processor 10 via Bluetooth or the like and print data is generated. If the desired number of copies are specified, multiple copies of the illustration can be printed.

In FIG. 5, it is assumed that four labels for the cup and three labels for the toothbrush will be printed. In this case, first the illustration is projected onto the cup, the size is adjusted, and four copies are specified, and then the illustration is projected onto the toothbrush, the size is adjusted, and three copies are specified.

Next, the print unit 30 prints the print data generated by the data processor 10. It is assumed here that the illustration of the tree is printed on a letter-size label sheet. Then, the print data with the illustration of the tree laid out in a predetermined manner is sent from the data processor 10 to the print unit 30, which then prints the print data using the predetermined layout.

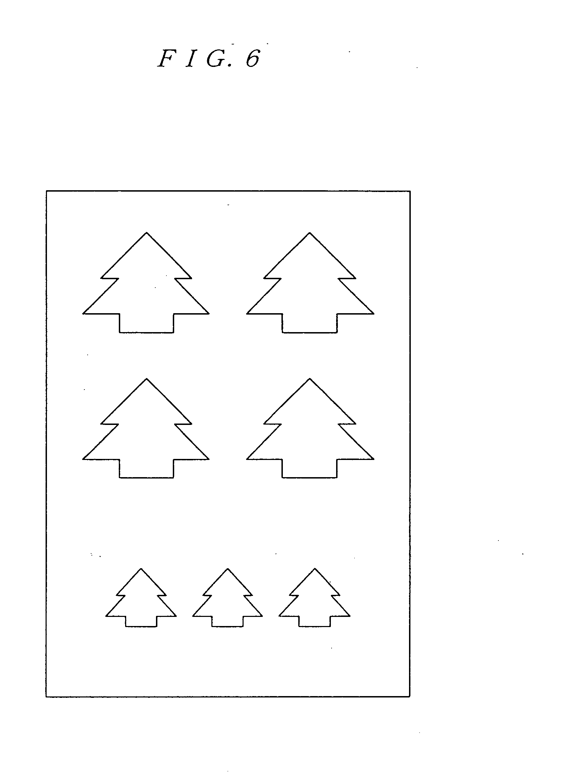

FIG. 6 shows an example of the results of printing. In the figure, all the copies of the illustration are printed on the letter-size label sheet.

Incidentally, when the illustration of the tree is printed, it will be convenient if the printer which constitutes the print unit 30 cuts each copy of the illustration automatically or perforates the sheet to make it easier to cut off the copies. Also, by matching colors between the surface of the label sheet and projection plane, it is possible to reduce the difference between the previewed image and actually printed image.

When projecting an image onto a curved surface of a cup or the like, conditions of the curved surface is measured by sensors andprint data is corrected. For example, whenpasting an illustration on a cup, if an image slightly larger in the right-and-left direction than the projected image is printed andpastedon the cup, it is possible to match appearance between the projected image and printed and pasted illustration.

Also, a small printer serving as the print unit 30 may be attached to the image display unit 20 to form an integral unit. In that case, the projected image can be printed directly on the printing surface of the cup or toothbrush. However, in the apparatus which incorporates the small printer, the distance between the apparatus and projection plane during previewing may differ from the distance between the apparatus and printing surface during printing. Even in that case, the print data must be printed exactly like the previewed image. Thus, by detecting the distance between the apparatus and projection plane during previewing as well as the distance between the apparatus and printing surface during printing and making corrections to the print data, it is possible to print an image of the appropriate size.

As described above, the printing device 1 according to this embodiment displays a previewed image on a surface for printing (printing paper or a surface for pasting a print) to allow the user to preview how content data will be printed. As the user adjusts the previewed image to obtain intended results, an image identical to the image being previewed is printed on the printing paper.

This makes it easy to print desired content.

Specifically, since the user can verify an image displayed on the surface on which the image will be actually printed or pasted, it is possible to prevent the actual print produced or pasted on the printing paper from differing from the user's expectations.

Also, when printing a plurality of images which will be cut off when used, the printing device 1 according to this embodiment prints them after laying them out efficiently on printing paper according to their shapes or the like. This eliminates waste of printing paper.

Furthermore, the printing device 1 can be made more convenient by cutting each print automatically or perforating the printing paper to make it easier to cut off the prints.

Incidentally, in addition to ink jet printers, this embodiment is applicable to laser printers, thermal transfer printers, and various other types of printers. However, the ink jet printer, which accommodates some irregularities on the printing surface, can print on a wide range of printing surfaces.

Also, the image display unit 20 may be an LCD type, DLP (Digital Light Processing) type, or other type of projector; or a projector using LED (Light Emitting Diode) hologram or laser. Light may be projected either from the front surface or rear surface of the printing paper.

Besides, the printing device 1 or the image display unit 20 in FIG. 5 may be equipped with a scanner, and images captured by the scanner may be used as content data.

The communications means in the data processor 10, image display unit 20, and print unit 30 may employ wire communications such as USB (Universal Serial Bus), IEEE1394, or 10BaseT or wireless communications such as IEEE802.11x, Bluetooth, or optical communications.

Incidentally, although it has been explained that according to this embodiment the image display unit 20 proj ects an image onto the printing surface to allow the user to preview the results of printing, it is also possible to superimpose a transmissive display over the printing paper, allowing the user to preview the video image presented on the display.

Also, this embodiment has cited an example in which distances are calculated from the magnification and focal distance of the lens, but then the lens must be focused on the projection plane in advance. Available focusing methods include amethodwhich involves operating a focus ring manually and a method which involves focusing on the center of the projected image.

Also, the projection display, transmissive display, printing device, etc. according to this embodiment may be either monochromatic or polychromatic.

Furthermore, the present invention can also be used to embroider cloth on a sewing machine and print images on photographic paper.

### (Second Embodiment)

Next, a second embodiment of the present invention will be described.

A printing device 2 according to this embodiment is configured to make large prints such as signboards, posters, and POP (point-of-purchase) signboards.

Incidentally, the functional configuration of the printing device 2 is the same as that of the printing device 1 in FIG. 1, and thus description thereof will be omitted here by referring to FIG. 1.

Also, the operation of the printing device 2 is the same as that of the printing device 1 in FIG. 2, and thus description thereof will be omitted here by referring to the flowchart in FIG. 2.

Now, description will be given below of how printing is done on a specific printing device configured as the printing device 2.

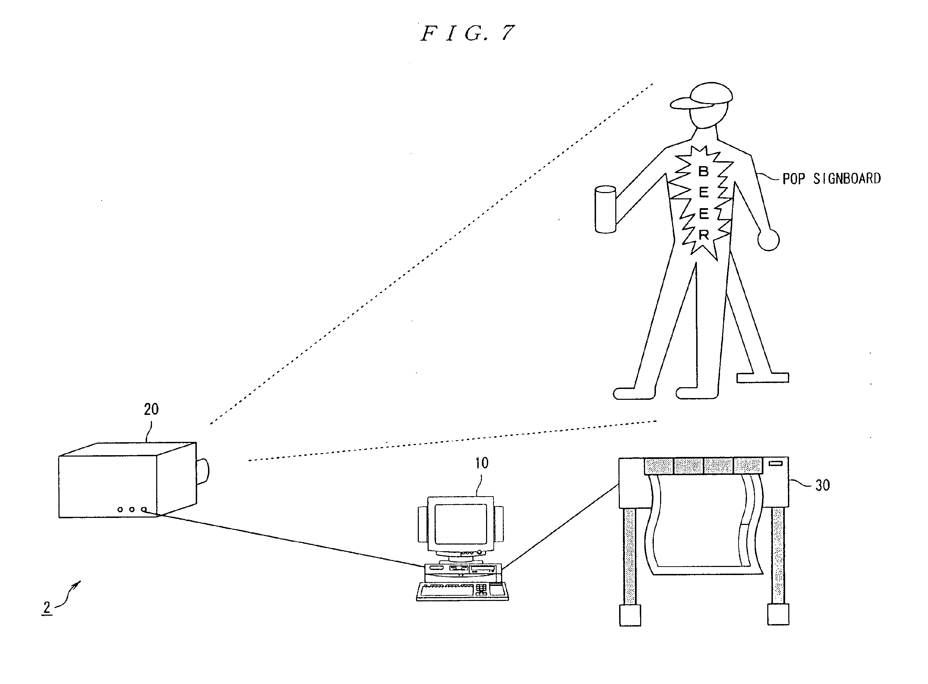

FIG. 7 shows how the printing device 2 is used to print a life-size POP signboard.

In FIG. 7, the printing device 2 comprises a PC which corresponds to the data processor 10, projector which corresponds to the image display unit 20, and large format printer (LFP) which corresponds to the print unit 30.

The projector projects an advertisement onto the POP signboard and the user adjusts the previewed image of the advertisement by operating the projector so that intended position, size, etc. will be obtained on the paper. The projector acquires the contour of the POP signboard as a piece of projection plane information.

The user verifies that the projected image matches the intended position, size, etc. and decides on the image to be printed (e.g., presses an Enter button). Then, supposing a contour of the same size as the real POP signboard, on the printing paper, the PC generates print data to produce an image equal in position, size, etc. to the projected image, within the contour. The large format printer prints the advertisement exactly as it is shown by the projected image according to the processing results produced by the PC.

The advertisement is printed on square printing paper, cut to conform to the contour of the POP signboard, and pasted to the POP signboard.

The advertisement may be printed on the large format printer in such a way that the user can distinguish the contour of the POP signboard provided tentatively on the printing paper. For example, lines which indicate the contour of the POP signboard may be printed on the printing paper or margins outside the contour may be filled with a predetermined color or pattern.

In this way, printing the contour of the POP signboard such that the user can recognize it will make it easier to cut the advertisement to conform to the contour of the POP signboard.

As described above, when printing an advertisement for a POP signboard on the printing device 2, the size of the advertisement can be previewed easily on the POP signboard on which the advertisement will be actually pasted and he advertisement can be printed exactly as previewed.

Now, description will be given of how an advertisement is printed on a large signboard (e.g., a few meters square).

FIG. 8 shows how the printing device 2 is used to print a large signboard.

The equipment configuration in FIG. 8 is the same as that in FIG. 7.

In FIG. 8, to produce a print, the projector projects an advertisement onto the large signboard and the user adjusts the previewed image of the advertisement by operating the projector so that intended position, size, etc. will be obtained on the paper.

Markers are provided at predetermined positions on the projectionplane (which carries the advertisement) of the large signboard to divide the projection plane into areas of a predetermined size. The markers are located at lattice points which divide both length and width of the projection plane of the large signboard virtually into intervals of 1 meter of less. They consist of protrusions which have a predetermined height or circles drawn in a predetermined color, for example. The projector acquires the positions of the markers in the proj ected image as proj ection plane information.

Returning to FIG. 8, when the user verifies that the projected image matches the intended position, size, or the like and decides on the image to be printed (e.g., presses an Enter button), the PC generates print data to produce an image equal in color, size, etc. to the projected image.

The advertisement in the large signboard is larger in size than the largest printing paper which can be handled by the large format printer, and thus the PC divides the advertisement and prints on multiple sheets of printing paper.

Specifically, the PC divides the advertisement into areas each of which fit in printing paper of a predetermined size according to the positions of the markers acquired as the projection plane information.

Then, the large format printer prints each of the divided areas in the printingpaper of the predetermined size according to the processing results produced by the PC. The images printed on individual sheets of printing paper are equal in color, size, etc. to the corresponding parts of the projected image of the advertisement proj ected onto the proj ection plane of the large signboard. For example, in FIG. 8, a projected image which contains a rear right wheel of an automobile (hereinafter referred to as the "lower right proj ected image") is projected onto the lower right area of the large signboard. The PC divides the advertisement and the large format printer prints that part of the advertisement which corresponds to the lower right projected image in the projected color and size.

Thus, the images printed on the individual sheets of printing paper by the large format printer are pasted in place on the large signboard, thereby forming an image of the advertisement exactly like the projected image.

As described above, when printing an advertisement on a large signboard using the printing device 2, the size and the like of the advertisement can be previewed easily on the large signboard on which the advertisement is pasted and the advertisement can be printed exactly as previewed.

Also, when dividing and printing an advertisement on multiple sheets of printing paper, the advertisement can be divided easily and appropriately using markers provided on the projection plane of the large signboard.

Incidentally, when a previewed image is projected onto a large area such as a large signboard, the content data such as an advertisement to be proj ectedmaybe divided into multiple parts and individual pieces of content data may be projected from different projectors to form a single previewed image. For example, previewed images may be projected onto the left and right halves of a large signboard to form a single previewed image.

### (Third Embodiment)

Next, a third embodiment of the present invention will be described.

A printing device 3 according to this embodiment is configured to print clothing material with dyes.

Incidentally, although the printing device 3 is configured such that the image display unit 20 projects a previewed image onto clothing material and that the print unit 30 prints the clothingmaterial with dyes, the basic functional configuration of the printing device 3 is the same as that of the printing device 1 in FIG. 1, and thus description thereof will be omitted here by referring to FIG. 1.

Also, the operation of the printing device 3 is the same as that of the printing device 1 in FIG. 2, and thus description thereof will be omitted here by referring to the flowchart in FIG. 2.

Now, description will be given below of how printing is done on a specific printing device configured as the printing device 3.

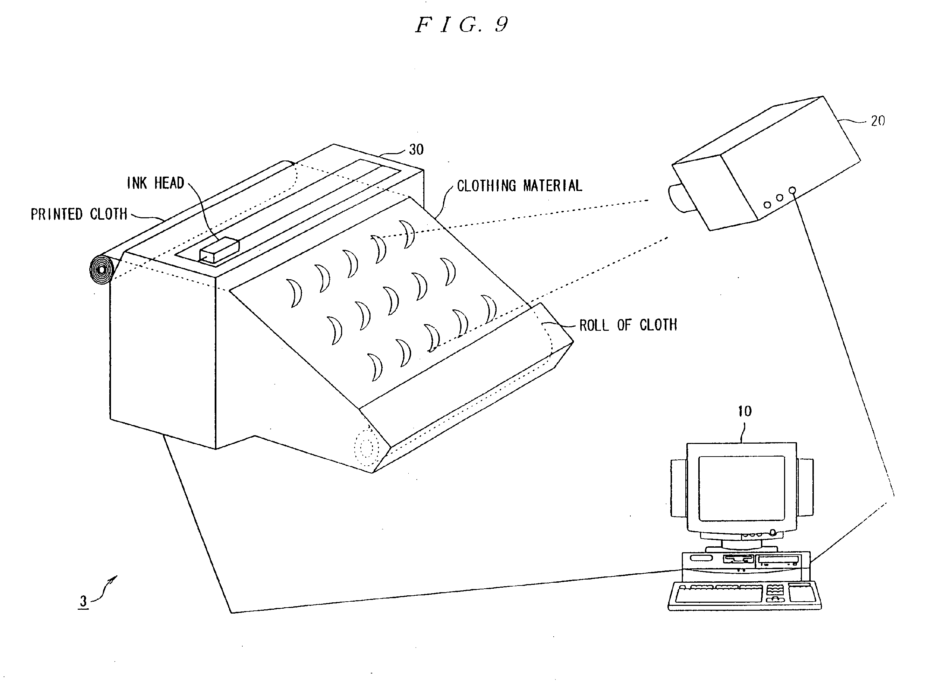

FIG. 9 shows how the printing device 3 is used for textile printing.

In FIG. 9, the printing device 3 comprises a PC which corresponds to the data processor 10, projector which corresponds to the image display unit 20, and textile printer which corresponds to the print unit 30.

The projector projects a print pattern onto the clothing material and the user adjusts the projected image of the print pattern by operating the projector so that intended color, position, size, etc. will be obtained on the clothing material.

When the user verifies that the projected image matches the intended color, position, size, or the like and decides on the image to be printed (e.g., presses an Enter button), the PC generates print data to produce an image equal inposition, size, etc. to the projected image.

Then, the textile printer prints the print pattern exactly like the projected image, on the clothing material according to the processing results produced by the PC.

Specifically, a roll of cloth--i.e., wound clothing material--to be printed is mounted on the textile printer and the clothing material is feed sequentially from the roll. The textile printer is provided with an area for projecting the print pattern from the projector to the clothing material, allowing the user to verify the print pattern projected from the projector. When the user verifies the print pattern and decides on the projected pattern (image to be printed), the textile printer moves an ink head sideways and sprays dyes from the ink head while feeding the clothing material sequentially. Consequently, the print pattern exactly like the projected image is printed on the clothing material.

Here, color matching between the image (preview image) projected onto the clothing material and the printed pattern is especially important for textile printing.

As a method for the color matching, the calibration technology described in Japanese Patent Laid-Open No. 2003-50572 can be used. Specifically, this method involves projecting a test pattern, reading the projected test pattern with a colored-light sensor employing a CCD or the like, and calibrating the colors of the projected image so as to match reference values. Textile printers can similarly be calibrated by printing a test pattern onto clothing material, reading the test pattern with a color-light sensor, and making the colors of the printed pattern match the reference values.

In this way, color matching can be performed by matching the colors of a projected image and the colors of a printed pattern to reference values.

Another method involves comparing the colors of a projected image and the colors of a printed pattern visually and making adjustments so that they match each other. Since thismethodmatches colors directlybasedonuser's impressions, it can perform color matching more reliably without error.

As described above, the printing device 3 according to this embodiment projects a preview image of a print pattern onto clothing material, allowing the user to adjust it to the color, position, size, etc. he/she wants before printing the print pattern.

That is, this embodiment allows the user to preview the print pattern on the clothing material on which it will be actually printed and to verify design including the textures of the clothing material.

Thus, this embodiment can increase the flexibility and accuracy of design and improve quality. Furthermore, since the design and printing can be verified in a short period of time, this embodiment can shorten the delivery time of clothing material in terms of the shorter time required for textile printing.

### (Fourth Embodiment)

Next, a fourth embodiment of the present invention will be described.

A printing device 4 according to this embodiment is configured to print wallpapers for buildings.

Incidentally, the functional configuration of the printing device 4 is the same as that of the printing device 1 in FIG. 1, and thus description thereof will be omitted here by referring to FIG. 1.

Also, the operation of the printing device 4 is the same as that of the printing device 1 in FIG. 2, and thus description thereof will be omitted here by referring to the flowchart in FIG. 2.

Now, description will be given below of how printing is done on a specific printing device configured as the printing device 4.

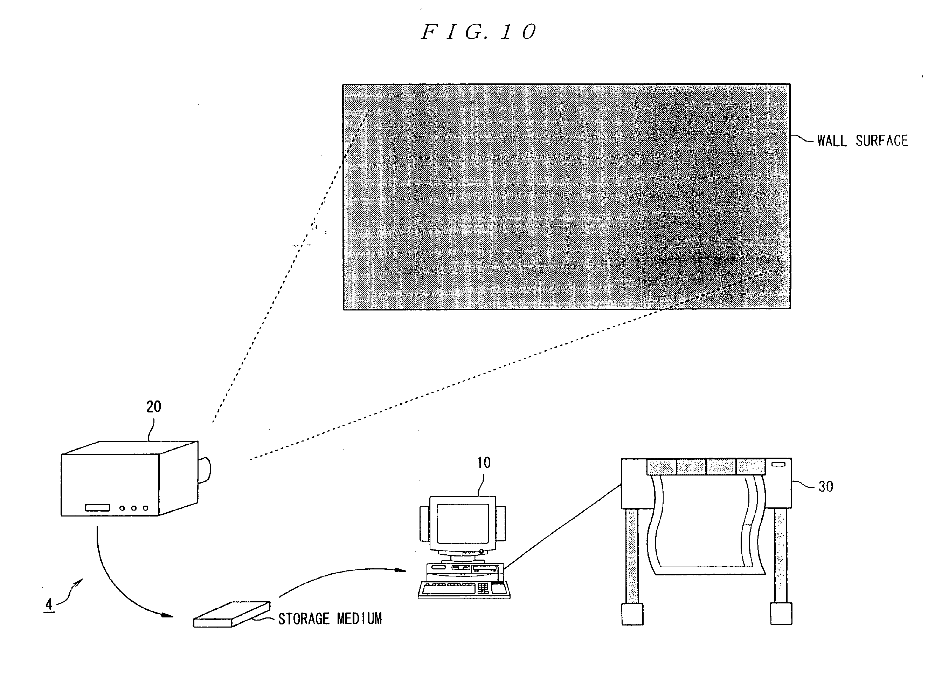

FIG. 10 shows how the printing device 4 is used to print wallpapers.

In FIG. 10, the printing device 4 comprises a PC which corresponds to the data processor 10, projector which corresponds to the image display unit 20, and wallpaper printer which corresponds to the print unit 30. It is assumed here that the wallpaper printer is a special-purpose printer installed at a printing plant.

With this configuration, when choosingwallpapers to hang in a new house under construction, for example, the projector is brought into the house under construction, and previewed images are projected onto the walls on which the wallpapers are to be put up. The content of the images to be projected may be supplied on a storage medium such as a memory card.

Using the previewed images on the wall surfaces, the orderer of wallpapers selects the wallpapers of his/her desired colors, patterns, etc.

Furthermore, the projector acquires projection adjustment values and projection plane information for the previewed images verified by the orderer and stores them on a storage medium such as a memory card.

Subsequently, the storage medium is sent to the printing plant where the wallpaper printer is installed. Then, the projection adjustment values and projection plane information are read out of the storage medium by a PC connected to the wallpaper printer.

The PC generates print data based on the projection adjustment values and projection plane information read out.

Then, the wallpaper printer prints the wallpapers exactly as shown by the projected images according to the processing results produced by the PC.

As described above, the printing device 4 according to this embodiment makes the projector project patterns and the like of actual wallpapers onto the wall surfaces on which wallpapers will be put up, allowing the orderer to adjust them to the colors, patterns, etc. he/she wants before printing the wallpapers.

In particular, after walls and windows are constructed in a new house under construction, this embodiment allows the user to preview wallpapers on wall surfaces and select the colors andpatterns of thewallpapers taking into consideration the atmosphere of rooms.

Thus, selections can be made more accurately based on the impressions of the wallpapers actually hung on the wall surfaces than when selecting wallpapers using small samples as is conventionally the case.

Incidentally, in addition to colors and patterns, textures constitute an important design factor in the case of wallpapers. By projecting previewed images onto white paper with the same textures as the wallpaper material which will be printed, this embodiment allows wallpapers to be selected taking their textures into consideration.

## Claims

1. A preview device, comprising:
displaymeans for simulating a state where a predetermined image is actually drawn on an image-forming surface on which a tangible image is formed; and
display information acquisition means for acquiring display information about actual display state of the image displayed by the display means on the image-forming surface.

2. The preview device according to claim 1, wherein the display information contains at least the size of the displayed image on the image-forming surface, position of the displayed image on the image-forming surface, or color of the displayed image on the image-forming surface.

3. The preview device according to claim 1 or 2, further comprising correction means for changing the display state of the image displayedby the display means on the image-forming surface.

4. The preview device according to any of claims 1 to 3, wherein the display means simulates a state where an image is actually drawn on the image-forming surface by projecting light on the image-forming surface.

5. The preview device according to claim 4, wherein the display information acquisition means acquires the display information based on at least the position of the display means to the image-forming surface, distance of the display means from the image-forming surface, projection angle of light projected onto the image-forming surface, or color of the image-forming surface.

6. The preview device according to claim 5, wherein the distance of the display means from the image-forming surface is acquired based on the magnification and focal distance of an optical system used by the display means to proj ect light.

7. The preview device according to any of claims 1 to 3, wherein the display means includes a display which transmits light from one side to the other side of a display surface where images are displayed and the display means simulates a state where a predetermined image is actually drawn on the image-forming surface with the display superimposed over the image-forming surface.

8. The preview device according to any of claims 1 to 7, capable of generating drawing data for drawing the predetermined image on the image-forming surface nearly the same as the simulated predetermined image based on the display information.

9. The preview device according to claim 8, further comprising drawing means for drawing the predetermined image tangibly based on the drawing data.

10. The preview device according to claim 9, wherein the drawing means draws the predetermined image directly on the image-forming surface based on the drawing data.

11. The preview device according to claim 9, wherein the drawing means draws the predetermined image on a drawing medium added to the image-forming surface, based on the drawing data.

12. The preview device according to claim 11, wherein the drawing means is capable of drawing the predetermined image on a plurality of drawing media by dividing it into parts.

13. The preview device according to claim 12, wherein the image-forming surface contains markers which serve as a guide for dividing the image-forming surface into multiple areas, the display information acquisition means acquires the positions of the markers on a displayed image, and the drawing means draws the predetermined image on a plurality of drawing media by dividing it into parts based on the positions of the markers.

14. The preview device according to claim 13, wherein the drawing means is a predetermined printer.

15. The preview device according to claim 14, wherein the drawing means is an ink jet printer.

16. The preview device according to any of claims 9 to 15, further comprising color matching means for matching colors between the image displayed by the display means and the image drawn by the drawing means.

17. The preview device according to any of claims 8 to 16, capable of acquiring the display information about a plurality of images, judging the shape of each image based on the display information, and laying out the plurality of images on a drawing surface at a higher density.

18. The preview device according to any of claims 9 to 17, further comprising cutting means for automatically cutting off, or making it easy to cut off, images drawn by the drawing means.

19. The preview device according to any of claims 1 to 18, further comprising image reading means for reading images and capable of utilizing data about the images read by the image reading means.

20. The preview device according to any of claims 1 to 19, wherein at least one of the means described above is configured as a unit separate from the other means and is capable of communicating with the other means.

21. The preview device according to any of claims 1 to 20, wherein the display means includes a plurality of projectors capable of projecting screen images onto the image-forming surface and displays the predetermined image using the screen images projected by the individual projectors on the image-forming surface.

22. An electronic device equipped with the preview device set forth in any of claims 1 to 21.

23. An image forming apparatus equipped with the preview device set forth in any of claims 1 to 21.
